# EUROPÄISCHE PATENTSCHRIFT

(11) **EP 2 295 870 B1**
(45) Veröffentlichungstag und Bekanntmachung des Hinweises auf die Patenterteilung: **27.11.2019**
(21) Anmeldenummer: 10008417.7
(22) Anmeldetag: 12.08.2010
(51) Int. Cl.: F24D 3/08, F24D 11/00

(54) **Verfahren zur Kombination einer Dachheizzentrale mit einer Solaranlage**
Method for combining a ceiling heating centre with a solar assembly
Procédé de combinaison d'une centrale de chauffage de toit et d'une installation solaire

(30) Priorität: 21.08.2009 AT 13232009
(43) Veröffentlichungstag der Anmeldung: 16.03.2011
(73) Patentinhaber: Vaillant GmbH, 42859 Remscheid (DE)
(72) Erfinder: Menne, Peter, 42857 Remscheid (DE)
(74) Vertreter: Popp, Carsten

(56) Entgegenhaltungen:
- EP-A1- 1 724 504
- EP-A2- 1 748 258
- WO-A1-01/79761
- WO-A1-2007/109899
- DE-A1- 1 779 391
- DE-A1- 2 519 796
- DE-A1- 4 440 036
- DE-A1- 10 212 113
- DE-A1- 19 612 191
- DE-B3-102005 002 932
- DE-U1- 29 806 463
- FR-A1- 2 490 788
- FR-A5- 2 079 495
- US-A- 4 052 001
- US-A- 4 242 872

## Beschreibung

Die Erfindung bezieht sich auf ein Verfahren zum Betrieb einer Vorrichtung zur Kombination einer Dachheizzentrale mit einer Solaranlage im Bestandsbau.

DE 25 19 796 A1 zeigt eine Heizungsanlage mit einem Heizkessel als Wärmequelle, einem Warmwasserspeicher und Konvektoren als Wärmesenken, so wie Heizungsanlagen im Bestand häufig vorgefunden werden.

Aus DE 10 2005 035 821 B3 ist eine thermische Solaranlage bekannt, bei welcher ein Solarkreislauf mit thermischem Solarkollektor über einen Wärmetauscher mit dem Heizungskreislauf eines Gebäudes verbunden ist. Hierdurch wird eine Nachrüstung einer bestehenden Heizungsanlage um einen Solarkollektor ohne aufwändige Verrohrung ermöglicht.

DE 10 2005 008 646 B3 zeigt die Kombination eines Solarabsorbers mit einer Heizungsanlage. Der Solarkollektor kann bedarfsgerecht über einen Wärmetauscher mit der Rücklaufleitung eines Heizkreislaufes eines Heizgerätes oder direkt über eine separate Verrohrung mit einem Warmwasserspeicher verbunden werden.

DE 10 2005 002 932 B3 zeigt einen Solarabsorber, der über einen Wärmetauscher mit einem Heizungskreislauf einer Gasheizung verbunden ist. Solarwärme vom Sonnenkollektor kann in die Vorlaufleitung des Heizgerätes eingebracht werden. Da die Vorlauftemperatur des Sonnenkollektors üblicherweise geringer ist als die die Vorlauftemperatur des Heizgerätes, wird bei der Vermischung der Wärmeträger abgekühlt. Die Vorrichtung ist demzufolge nicht zum gemeinsamen Betrieb des Solarabsorbers mit dem Heizgerät geeignet.

Auch US 4 052 001 A zeigt einen Solarabsorber, dessen Wärme mit dem Vorlauf eines Boilers gemischt werden oder alternativ zu diesem Boiler einen Heizkörper beheizt.

FR 2 490 788 A1 zeigt eine Heizeinrichtung, bei welcher die Vorlaufleitung einer Heizung und eines Solarabsorbers gemeinsam zum Beheizen eines Warmwasserspeichers genutzt werden können. Um das unterschiedliche Temperaturniveau zu berücksichtigen, wird der untere Teil des Speichers mit Solarwärme beheizt, während die Heizung vorzugsweise zum Beheizen des oberen Teils des Speichers dient.

Dokument DE 44 40 036 zeigt ein Verfahren mit den Merkmalen des Oberbegriffs von Anspruch 1.

Der Erfindung liegt die Aufgabe zugrunde, die Kombination einer Dachheizzentrale mit einer Solaranlage im Bestandsbau mit minimalem Leitungsaufwand zu ermöglichen.

Erfindungsgemäß wird dies gemäß den Merkmalen des unabhängigen Anspruchs dadurch gelöst, dass bei einer Heizungsanlage ein Heizgerät im oberen Bereich des Gebäudes, ein Warmwasserspeicher im unteren Bereich des Gebäudes, das Heizgerät über den Heizungskreislauf mit dem Warmwasserspeicher und ein Solarabsorber über einen Wärmetauscher in der Rücklaufleitung des Heizgerätes mit dem Heizungskreislauf verbunden wird. Es ist vorgesehen, dass mittels einer Bypassleitung mit Umschaltventil zwischen der Vor- und Rücklaufleitung des Heizgerätes letzteres umgangen werden kann, wenn der Wärmeeintrag in den Solarabsorber zur Befriedigung des Wärmebedarfs ausreicht. In der Vor- oder Rücklaufleitung des Warmwasser- oder Heizwasserspeichers ist ein Absperrventil angeordnet, so dass die Speicherladung ausgesetzt werden kann, um die Wärme ausschließlich den Heizkörpern zur Verfügung zu stellen. Zur Speicherladung des Warmwasser- oder Heizwasserspeichers werden die Heizkörperventile der Heizkörper geschlossen werden. Zur Wohnraumbeheizung wird das Absperrventil des Warmwasser- oder Heizwasserspeicher geschlossen, wobei wenn die Solarwärme zur Befriedigung des Heizungsbedarf nicht ausreicht, das 3-Wege-Umschaltventil derart geschaltet wird, dass der Durchfluss über die Bypassleitung gesperrt ist und das im Wärmetauscher vorgewärmte Heizungswasser von der Heizungsrücklaufleitung über das Heizgerät in die Heizungsvorlaufleitung fließt.

Verfügen die Heizkörper über Heizkörperventile und sind diese in bevorzugter Ausführungsform drahtlos oder leitungsgebunden elektrisch steuerbar, so können beispielsweise bei der Speicherladung die Heizkörper geschlossen werden, um die Speicherladung zu beschleunigen und / oder höhere Ladetemperaturen zu ermöglichen.

Ein Ausführungsbeispiel der Erfindung wird nun anhand der Figuren detailliert erläutert. Hierbei zeigen
Figur 1 eine Heizungsinstallation gemäß dem Stand der Technik, die als Ausgangszustand für die Umrüstung zu einer erfindungsgemäßen Heizungsanlage dienen kann,
Figur 2 eine Heizungsanlage mit Solarabsorber, Heizwasserpufferspeicher und Trinkwasserladesystem für die Anwendung des erfindungsgemäßen Verfahrens,
Figur 3 eine alternative, nicht erfindungsgemäße Heizungsanlage zur Heizungsunterstützung und Trinkwarmwasserbereitung mittels Trinkwarmwasserspeicher sowie
Figur 4 eine alternative, nicht erfindungsgemäße Heizungsanlage zur Heizungsunterstützung und Trinkwarmwasserbereitung mittels Heizwasserpufferspeicher und Trinkwasserladesystem, die auch zur Heizungsunterstützung genutzt werden kann.

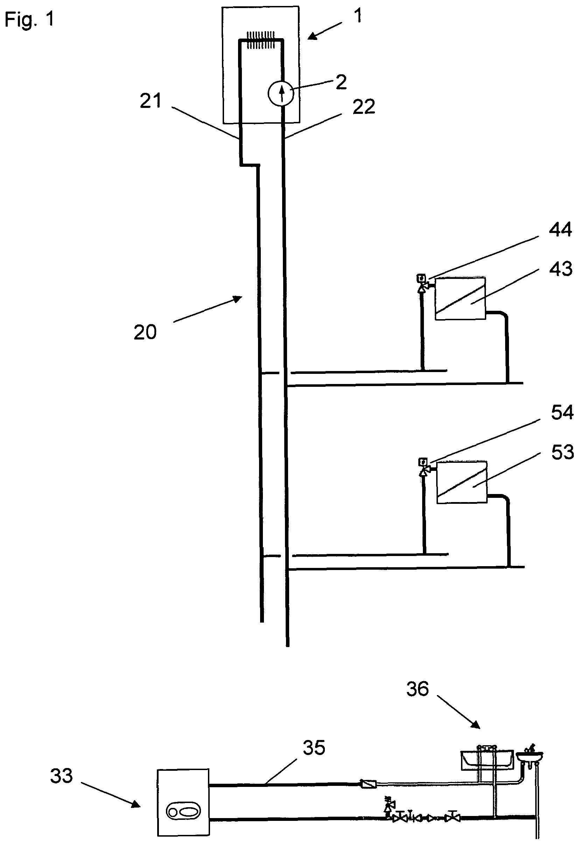

In Figur 1 ist eine übliche Heizungsanlage als Dachheizzentrale gemäß dem Stand der Technik mit einem Heizgerät 1, das für die Heizwasserbereitung im oberen Bereich eines nicht weiter dargestellten Hauses über eine Heizungsvorlaufleitung 21 und eine Heizungsrücklaufleitung 22 inklusive Umwälzpumpe 2 eines Heizungskreislaufs 20 mit zwei Heizkörpern 43, 53 verbunden ist. Die beiden Heizkörpern 43, 53 verfügen jeweils über ein Heizkörperventil 44, 54. Zur Befriedigung des Brauchwasserbedarfs ist ein elektrischer Durchlauferhitzer 33 über eine Trinkwarmwasserleitung 35 mit Verbraucherstellen 36 verbunden.

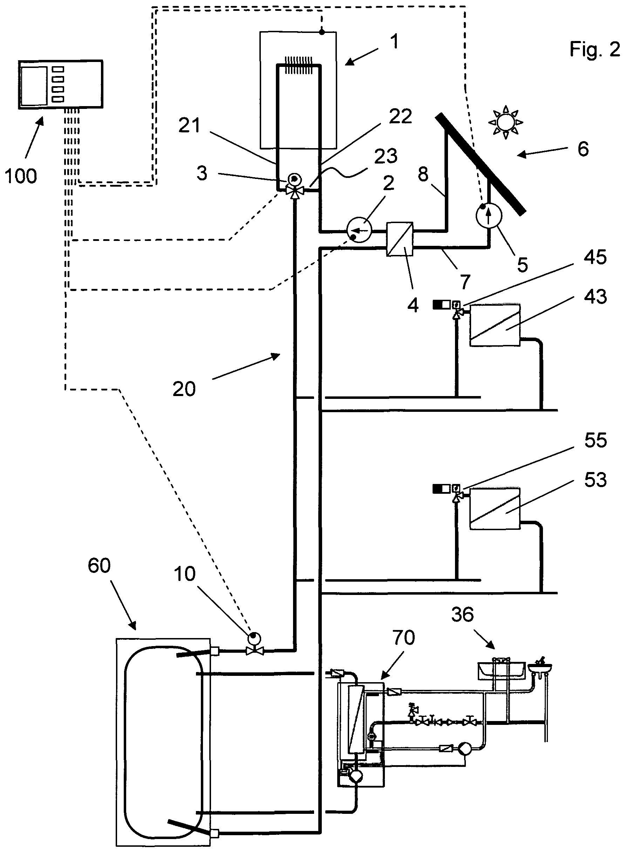

Figur 2 zeigt eine Heizungsanlage für Brauch- und / oder Heizungswasser mit einem Heizgerät 1, das ebenfalls im oberen Bereich eines nicht weiter dargestellten Hauses über eine Heizungsvorlaufleitung 21 eines Heizungskreislaufs 20 mit zwei Heizkörpern 43, 53 sowie einem Heizwasserpufferspeicher 60 verbunden ist. Die beiden Heizkörper 43, 53 verfügen jeweils über ein elektrisch betriebenes Heizkörperventil 45, 55. Ein Absperrventil 10 ist in der Heizungsvorlaufleitung 21 stromauf des Heizwasserpufferspeichers 60 angeordnet. Eine Heizungsrücklaufleitung 22 schließt den Heizungskreislauf 20. Zwischen der Heizungsvorlaufleitung 21 und Heizungsrücklaufleitung 22 befindet sich unmittelbar am Heizgerät 1 eine Bypassleitung 23, die in der Heizungsvorlaufleitung 21 in ein 3-Wege-Umschaltventil 3 mündet. Der Heizungskreislauf 20 verfügt ferner über eine Heizwasserumwälzpumpe 2.

Der Heizungskreislauf 20 ist über einen Wärmetauscher 4 mit einem Solarabsorber 6 verbunden. In der Solarrücklaufleitung 7 zwischen Wärmetauscher 4 und Solarabsorber 6 befindet sich eine Solarkreisumwälzpumpe 5. Der Wärmetauscher 4 ist ferner über eine Solarvorlaufleitung 8 mit dem Solarabsorber 6 verbunden.

Der Heizwasserpufferspeicher 60 ist über eine Trinkwasserladestation 70 mit Verbraucherstellen 36 verbunden.

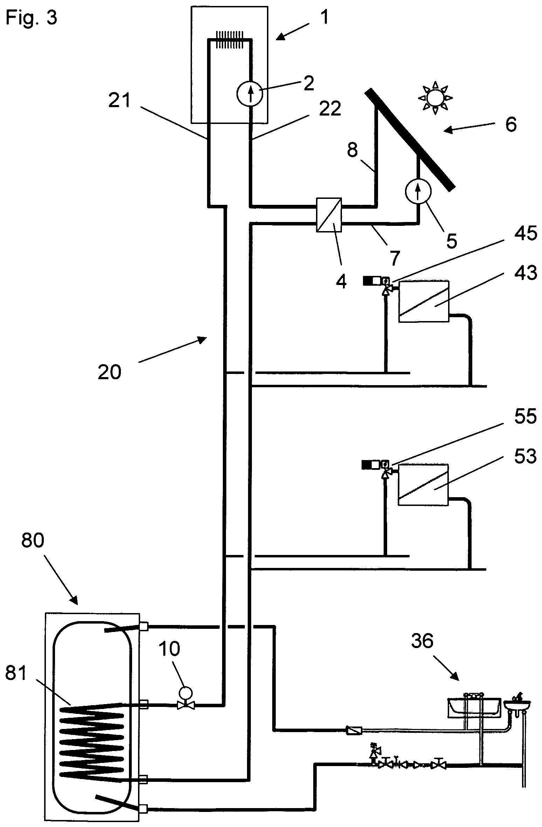

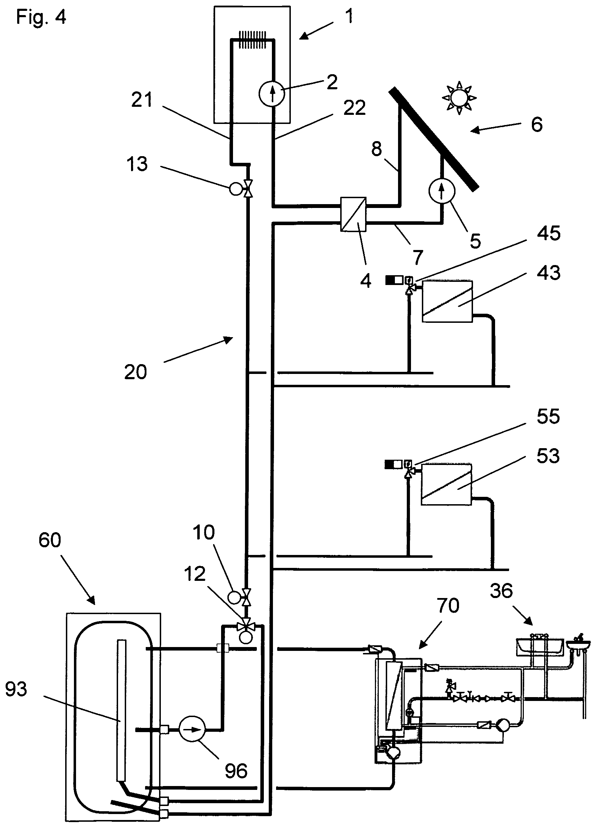

Eine Regelung ist mit dem Heizgerät 1, der Heizwasserumwälzpumpe 2, der Solarkreisumwälzpumpe 5, dem 3-Wege Umschaltventil 3 und dem Absperrventil 10 verbunden. Die Verbindung mit einer Regelung ist gemäß der Varianten in den Figuren 3 und 4 auch vorgesehen, jedoch der Übersichtlichkeit halber nicht dargestellt.

Figur 3 unterscheidet sich von Figur 2 vorwiegend dadurch, dass es sich bei dem Speicher um einen Trinkwarmwasserspeicher 80 handelt, in dem ein Spiralwärmetauscher 81, der mit dem Heizungskreislauf 20 verbunden ist, Trinkwasser erwärmt. Ferner ist die Heizwasserumwälzpumpe 2 Bestandteil des Heizgerätes 1 und der Heizungskreislauf 20 verfügt über kein 3-Wege-Ventil mit Bypassleitung zur Umgehung des Heizgerätes 1.

Auch die Heizungsanlage gemäß Figur 4 verfügt über kein 3-Wege-Ventil mit Bypassleitung zur Umgehung des Heizgerätes 1. Wie in Figur 2 verfügt die Heizungsanlage über einen Heizwasserpufferspeicher 60, der über eine Trinkwasserladestation 70 mit Verbraucherstellen 36 verbunden ist. In der Heizungsvorlaufleitung 21 befindet sich ein Absperrventil 13. Zwischen dem Absperrventil 10 in der Heizungsvorlaufleitung 21 und dem Heizwasserpufferspeicher 60 ist ein 3-Wege-Umschaltventil 12 angeordnet. Eine Verbindung zwischen dem Heizwasserpufferspeicher 60 und dem 3-Wege-Umschaltventil 12 beinhaltet eine Heizwasserumwälzpumpe 96 und führt in den mittleren Bereich des Heizwasserpufferspeichers 60. Die andere Verbindung zwischen dem Heizwasserpufferspeicher 60 und dem 3-Wege-Umschaltventil 12 führt über den unteren Bereich des Heizwasserpufferspeichers 60 in eine Schichtungslanze 93.

Eine Heizungsanlage gemäß dem Stand der Technik wie in Figur 1 dargestellt, kann mit verhältnismäßig geringem Aufwand in eine erfindungsgemäße Heizungsanlage wie in den Figuren 2 bis 4 dargestellt umgebaut werden. Von grundlegender Bedeutung ist, dass hierbei die Trinkwasserbereitung über einen Warmwasserspeicher, der mit dem Heizungskreislauf 20 verbunden wird, erfolgt und in den Heizungskreislauf 20 über einen Wärmetauscher 4 ein Solarabsorber 6 integriert wird.

Die Heizungsanlage gemäß Figur 1 wird wie folgt betrieben: Bei Brauchwasseranforderung durchströmt kaltes Wasser den Durchlauferhitzer 33, wo es erwärmt wird und gelangt über eine Trinkwarmwasserleitung 35 zu Verbraucherstellen 36. Bei Bedarf von Raumwärme erhitzt das Heizgerät 1 den Heizungskreislauf 20. Über die Heizungsvorlaufleitung 21 gelangt Heizungswasser zu den zwei Heizkörpern 43, 53 und von dort über die Heizungsrücklaufleitung 22 wieder zum Heizgerät. Die Heizkörperventile 44, 54 steuern den Durchfluss durch die Heizkörper 43, 53.

Eine Heizungsanlage gemäß Figur 1 kann zu einer Heizungsanlage gemäß Figur 2 umgebaut werden, indem im Wesentlichen anstelle des Durchlauferhitzers 33, ein Heizwasserpufferspeicher 60 installiert wird, der parallel zu den Heizkörper 43, 53 installiert wird. Der Heizwasserpufferspeicher 60 wird über eine Trinkwasserladestation 70 mit den Verbraucherstellen 36 verbunden. In die Heizungsrücklaufleitung 22 wird ein Wärmetauscher 4 integriert, der auf der Sekundärseite mit einem Solarabsorber 6 verbunden wird. Zwischen der Heizungsvorlaufleitung 21 und Heizungsrücklaufleitung 22 wird eine Bypassleitung 23 angeordnet, die über ein 3-Wege-Umschaltventil 3 in die Heizungsvorlaufleitung 21 mündet.

Zum reinen Heizbetrieb mittels Solaranlage werden die Heizwasserumwälzpumpe 2 und die Solarkreisumwälzpumpe 5 in Betrieb genommen. Solarwärme wird somit vom Solarabsorber 6 auf den Heizungskreislauf 20 übertragen. Das 3-Wege-Umschaltventil 3 ist derart geschaltet, dass ein Durchgang von der Heizungsrücklaufleitung 22 in die Heizungsvorlaufleitung 21 über die Bypassleitung 23 möglich und der Durchgang über das Heizgerät 1 gesperrt ist. Das Absperrventil 10 am Heizwasserpufferspeicher 60 wird geschlossen, sodass das Heizungswasser nur zu den Heizkörpern 43 und 53 geleitet wird.

Reicht die Solarwärme zur Befriedigung des Heizungsbedarf nicht aus, so wird das 3-Wege-Umschaltventil 3 derart geschaltet, dass der Durchfluss über die Bypassleitung 23 gesperrt ist und das im Wärmetauscher 4 vorgewärmte Heizungswasser von der Heizungsrücklaufleitung 22 über das Heizgerät 1 in die Heizungsvorlaufleitung 21 fließt. Das Absperrventil 10 am Heizwasserpufferspeicher 60 bleibt geschlossen, sodass das Heizungswasser weiterhin nur zu den Heizkörpern 43 und 53 geleitet wird.

Zur Trinkwassererwärmung wird das Absperrventil 10 am Heizwasserpufferspeicher 60 geöffnet. Die Beheizung der Räume mittels der Heizkörpern 43, 53 erfolgt hierbei nur sehr eingeschränkt mit Solarwärme, da die Thermostatventile 44, 54 durch ihren im Vergleich zum Pufferspeicher 60 hohen hydraulischen Druckverlust nur eine geringe Heizwassermenge zu den Heizkörpern gelangen lassen. Um im Sommerbetrieb ein ungewünschtes Aufheizen der Heizkörper zu vermeiden, können zum einen die Thermostatventile 44, 54 manuell geschlossen werden, zum anderen können beispielsweise Thermostatventile mit motorischem Antrieb verwendet werden, die direkt von einer Regelung oder Steuerung ansteuerbar sind und im Fall der Trinkwarmwasserbereitung geschlossen werden. Die Trinkwarmwasserbereitung erfolgt mittels einer Trinkwasserladestation 70, welche die Wärme aus dem Heizwasserpufferspeicher 60 bezieht und über einen internen Wärmetauscher auf das Trinkwasser, welches den Verbraucherstellen 36 bereitgestellt wird, überträgt. Auch bei der Trinkwassererwärmung kann - wie beim Heizbetrieb - das Heizgerät 1 entweder umgangen werden oder vorgewärmtes Heizungswasser weiter erwärmen.

Bei einer Heizungsanlage gemäß Figur 3 ist anstelle eines Heizwasserpufferspeichers ein Trinkwarmwasserspeicher 80 installiert, in dem sich ein Spiralwärmetauscher 81 befindet. Der Spiralwärmetauscher 81 ist mit dem Heizungskreislauf 20 verbunden und kann mittels eines Absperrventils 10 von der Wärmezufuhr getrennt werden. In Figur 3 ist im Vergleich zu Figur 2 die Bypassleitung entfallen; dementsprechend wird bei reinem Solarbetrieb ohne Brennereinsatz des Heizgerätes 1 das Heizungswasser durch das Heizgerät 1 geleitet ohne dabei erwärmt zu werden. Bei Bedarf wird der Brenner des Heizgerätes 1 zugeschaltet.

Zur Speicherladung des Trinkwarmwasserspeichers 80 wird das Absperrventil 10 am Trinkwarmwasserspeicher 80 geöffnet und bei Bedarf die Thermostatventile 45, 55 geschlossen. Wird an einer Verbraucherstelle 36 Brauchwasser entnommen, so strömt Kaltwasser unten in den Trinkwarmwasserspeicher 80 nach. Zum reinen Heizbetrieb wird das Absperrventil 10 geschlossen, so dass die gesamte zugeführte Wärme den Heizkörpern 43, 53 zugeführt wird.

Bei einer Heizungsanlage gemäß Figur 4 kommt wiederum ein Heizwasserpufferspeicher 60 zum Einsatz. Trinkwasser wird - wie in Figur 2 dargestellt - über eine Trinkwasserladestation 70 erwärmt. Im Gegensatz zu Figur 2 erfolgt die Zufuhr des warmen Heizungswassers in den Heizwasserpufferspeicher 60 nicht im obersten Bereich des Heizwasserpufferspeichers 60, sondern mittels einer Schichtungslanze 93 über fast die komplette Höhe des Heizwasserpufferspeichers 60, wobei das Absperrventil 10 geöffnet ist und das 3-Wege-Umschaltventil 12 die Vorlaufleitung 21 mit der Schichtungslanze 93 verbindet. Zur Bereitstellung von Wärme für die Heizkörper 43, 53 ohne gleichzeitige Einbringung von Solarwärme und / oder Betrieb des Heizgerätes 1 wird das 3-Wege-Umschaltventil 12 umgeschaltet, so dass die Vorlaufleitung 21 über die Heizwasserumwälzpumpe 96 mit dem mittleren Bereich des Heizwasserpufferspeichers 60 verbunden ist und das Absperrventil 13 in der Heizungsvorlaufleitung 21 geschlossen. Nun kann warmes Wasser aus dem Heizwasserpufferspeicher 60 zu den Heizkörpern 43, 53 gelangen und über die Heizungsrücklaufleitung 22 zurück zum Heizwasserpufferspeicher 60.

## Patentansprüche

1. Verfahren zum Betrieb einer Heizungsanlage für Brauch- und Heizungswasser für ein Gebäude mit einem Heizgerät (1) und einem thermischen Solarabsorber (6), bei dem der Solarabsorber (6) über einen Wärmetauscher (4) in der Rücklaufleitung (22) des Heizgerätes (1) mit einem Heizungskreislauf (20) verbunden ist, wobei das Heizgerät (1) im oberen Bereich des Gebäudes angeordnet ist und ein Warmwasser- oder Heizwasserspeicher (60, 80), dessen Wärmequelle ausschließlich über die Vor- (21) und Rücklaufleitung (22) des Heizungskreislaufes (20)verbunden ist, im unteren Bereich des Gebäudes angeordnet ist, der Heizungskreislauf (20) mit mindestens einem Heizkörper (43, 53) verbunden ist, wobei jedem Heizkörper (43, 53) ein Heizkörperventil (45, 55) zugeordnet ist und in der Vor- (21) oder Rücklaufleitung (22) des Warmwasser- oder Heizwasserspeichers (60, 80) ein Absperrventil (10) angeordnet ist, **dadurch gekennzeichnet, dass** zwischen Vor- (21) und Rücklaufleitung (22) des Heizgerätes (1) eine Bypassleitung (23) mit Umschaltventil angeordnet ist, und dass zur Speicherladung des Warmwasser- oder Heizwasserspeichers (60, 80) die Heizkörperventile (45, 55) der Heizkörper (43, 53) geschlossen werden und
zur Wohnraumbeheizung das Absperrventil (10) des Warmwasser- oder Heizwasserspeicher (60, 80) geschlossen wird, wobei
wenn die Solarwärme zur Befriedigung des Heizungsbedarf nicht ausreicht, das 3-Wege-Umschaltventil (3) derart geschaltet wird, dass der Durchfluss über die Bypassleitung (23) gesperrt ist und das im Wärmetauscher (4) vorgewärmte Heizungswasser von der Heizungsrücklaufleitung (22) über das Heizgerät (1) in die Heizungsvorlaufleitung (21) fließt.

## Claims

1. Method for operating a heating system for service water and heating water for a building having a heating device (1) and a thermal solar absorber (6), in the case of which the solar absorber (6) is connected via a heat exchanger (4) in the return line (22) of the heating device (1) with a heating circuit (20), wherein the heating device (1) is disposed in the upper region of the building and a warm water or hot water storage (60, 80), the heat source of which is connected exclusively via the supply line (21) and return line (22) of the heating circuit (20), is disposed in the lower region of the building,
the heating circuit (20) is connected with at least one heating body (43, 53), wherein to a heating body valve (45, 55) is assigned to each heating body (43, 53) and in the supply line (21) or return line (22) of the warm water or hot water storage (60, 80) is disposed a shut-off valve (10), **characterised in that** a bypass line (23) having a changeover valve is disposed between supply line (21) and return line (22) of the heating device (1), and that the heating body valves (45, 55) of the heating bodies (43, 53) are closed for storage charging of the warm water or hot water storage (60, 80) and for heating living space the shut-off valve (10) of the warm water or hot water storage (60, 80) is closed, wherein when the solar heat is not sufficient to satisfy the heating requirement the three-way changeover valve (3) is switched such that the throughflow via the bypass line (23) is locked and the heating water, prewarmed in the heat exchanger (4), flows from the heating return line (22) via the heating device (1) into the heating supply line (21).

## Revendications

1. Procédé de fonctionnement d'une installation de chauffage pour eau sanitaire et de chauffage pour un bâtiment avec un appareil chauffant (1) et avec un absorbeur solaire thermique (6), selon lequel l'absorbeur solaire (6) est relié à un circuit de chauffage (20) par l'intermédiaire d'un échangeur de chaleur (4) dans la conduite retour (22) de l'appareil chauffant (1), dans lequel l'appareil chauffant (1) est agencé dans la zone supérieure du bâtiment et un réservoir d'eau chaude ou d'eau de chauffage (60, 80), dont la source de chaleur est reliée exclusivement par l'intermédiaire de la conduite aller (21) et retour (22) du circuit de chauffage (20), est agencé dans la zone inférieure du bâtiment,
le circuit de chauffage (20) est relié à au moins un corps chauffant (43, 53), dans lequel une soupape de corps chauffant (45, 55) est associée à chaque corps chauffant (43, 53) et une soupape d'arrêt (10) est agencée dans la conduite aller (21) ou retour (22) du réservoir d'eau chaude ou d'eau de chauffage (60, 80), **caractérisé en ce qu'**une conduite de dérivation (23) avec soupape de commutation est agencée entre la conduite aller (21) et la conduite retour (22) de l'appareil chauffant (1) et **en ce que**, pour charger le réservoir d'eau chaude ou d'eau de chauffage (60, 80), les soupapes de corps chauffant (45, 55) du corps chauffant (43, 53) sont fermées et, pour chauffer le local d'habitation, la soupape d'arrêt (10) du réservoir d'eau chaude ou d'eau de chauffage (60, 80) est fermée, dans lequel,
si la chaleur solaire ne suffit pas à satisfaire aux besoins de chauffage, la soupape de commutation à 3 voies (3) est commutée de telle sorte que le flux via la conduite de dérivation (23) est bloqué et l'eau de chauffage préchauffée dans l'échangeur thermique (4) s'écoule de la conduite retour de chauffage (22) à la conduite aller de chauffage (21) par l'intermédiaire de l'appareil chauffant (1).
